Europäisches Patentamt

European Patent Office

Office européen des brevets

(19)

(11) Numéro de publication: **0 181 261**
**A1**

(12) **DEMANDE DE BREVET EUROPEEN**

(21) Numéro de dépôt: **85402116.9**

(22) Date de dépôt: **05.11.85**

(51) Int. Cl.⁴: **C 04 B 40/02**

(30) Priorité: **06.11.84 FR 8416867**

(43) Date de publication de la demande:
**14.05.86 Bulletin 86/20**

(84) Etats contractants désignés:
**AT BE CH DE FR GB IT LI LU NL SE**

(71) Demandeur: **CENTRE D'ETUDES ET DE RECHERCHES DE L'INDUSTRIE DU BETON MANUFACTURE (CERIB)**
**Centre Technique Industriel dit:**
**B. P. 59**
**F-28230 Epernon(FR)**

(72) Inventeur: **Dutruel, Francis André**
**Chemin de la Ferme de Croix**
**F-28230 Epernon(FR)**

(72) Inventeur: **Estoup, Jean-Marie Pierre**
**4 ruelle Prieuré**
**F-28230 Epernon(FR)**

(74) Mandataire: **Joly, Jean-Jacques et al,**
**CABINET BEAU DE LOMENIE 55, rue d'Amsterdam**
**F-75008 Paris(FR)**

(54) **Procédé de carbonatation du béton.**

(57) Un polyisocyanate finement dispersé sous forme d'une émulsion dans l'eau ou par pulvérisation est mélangé à un mortier ou béton de ciment Portland lors du malaxage, la quantité d'émulsion ou de dispersion utilisée étant choisie pour ajouter un poids de polyisocyanate compris entre 0,5 et 5% du poids de ciment, et le mélange est mis en oeuvre. On assure ainsi une carbonatation endogène du béton ce qui diminue la sensibilité aux phénomènes d'efflorescences, augmente les résistances mécaniques à court terme et stabilise le retrait. Le béton carbonaté offre une meilleure résistance aux agents agressifs, le procédé permet aussi de parfaitement localiser la carbonatation et d'améliorer par exemple la durabilité de fibres de verre incorporées à une matrice à base de ciment.

EP 0 181 261 A1

## PROCEDE DE CARBONATATION DU BETON

La présente invention concerne un procédé de carbonatation du béton.

Les procédés habituellement utilisés pour réaliser une carbonatation accélérée du béton consistent à placer les produits en béton dans des cellules dont l'atmosphère enrichie en anhydride carbonique est régulée en température et en hygrométrie, les valeurs optimales de ces paramètres étant respectivement de $40^{\circ}C$ et 60% d'humidité relative.

Ces procédés sont relativement coûteux à mettre en oeuvre et nécessitent des installations spéciales. De plus, la teneur en eau libre du béton frais et la texture de celui-ci influent directement sur les conditions de diffusion de l'anhydride carbonique et donc sur la vitesse de carbonatation. En effet, la diffusion du gaz est limitée par l'eau libre contenue dans les pores du béton et il est bien évident que les bétons les plus compacts, tels que ceux fortement dosés en ciment, et donc de faible porosité sont peu carbonatés lors de ces traitements.

Aussi, la présente invention a-t-elle pour but de fournir un procédé permettant une carbonatation effective des bétons sans nécessiter d'installations spéciales à cet effet, c'est-à-dire un procédé permettant une carbonatation endogène, au sein du béton mis en oeuvre.

Ce but est atteint grâce à un procédé selon lequel, conformément à l'invention, un polyisocyanate à l'état finement dispersé est mélangé à un mortier ou béton de préférence à base de ciment Portland, lors du malaxage. La quantité de polyisocyanate utilisée correspond à environ 0,5 à 5% du poids du ciment et le ciment utilisé a une temps de prise de préférence inférieur à 5 heures. Après malaxage, le mélange est directement mis en oeuvre.

L'introduction du polyisocyanate à l'état finement dispersé est nécessaire pour permettre sa répartition régulière au sein du béton. L'on sait que de l'anhydride carbonique est produit par réaction des polyisocyanates avec l'eau. Il s'avère que le dégagement d'anhydride carbonique n'intervient de façon significative, au sein du béton, que quelques heures après la mise en présence de l'isocyanate avec l'eau utilisée pour la confection du béton. En utilisant un ciment Portland à temps de prise relativement court, l'anhydride carbonique produit est donc adsorbé dans une matrice déjà rigide. L'eau employée pour la confection du béton est déjà fixée soit physiquement par capillarité (porosité des granulats, canalicules du béton), soit chimiquement par les réactions d'hydratation. L'anhydride carbonique se trouve au contact de l'eau sous forme vapeur dans les canalicules du béton, d'où formation d'acide carbonique dissocié qui réagit avec les hydrates présents, en particulier la chaux.

Ainsi, l'un des avantages obtenus grâce au procédé selon l'invention consiste en ce que l'anhydride carbonique est produit simultanément aux réactions d'hydratation du ciment, permettant la carbonatation endogène recherchée. Un dégagement d'anhydride carbonique dans le béton frais, avec échappement de ce gaz non fixé, est de la sorte évité, ce qui sinon pourrait provoquer la formation de microfissures avec une diminution notable des propriétés mécaniques. A cet égard, l'introduction du polyisocyanate à l'état finement dispersé lors d'un malaxage du mortier et l'utilisation d'un ciment Portland à temps de prise relativement court sont des caractéristiques importantes du procédé selon l'invention.

On notera ici que l'incorporation de polyisocyanates dans des compositions de béton a déjà été proposée dans l'art antérieur, dans le but d'accélérer la prise du béton. Toutefois, les polyisocyanates sont alors associés à d'autres composants organiques, par exemple des solvants organiques ou des polymères hydrosolubles comme décrit dans le document FR-A-2 167 586. Dans ces procédés connus, la carbonatation des bétons n'est pas visée et paraît même plutôt évitée dans la mesure où un dégagement d'anhydride carbonique n'est pas recherché.

L'incorporation du polyisocyanate dans le mélange peut être réalisée de plusieurs façons dans le cadre du procédé selon l'invention.

Ainsi, le polyisocyanate peut être dispersé dans de l'eau de manière à former une émulsion dans laquelle le polyisocyanate et l'eau sont dans un rapport pondéral compris par exemple entre 4:1 et 2:1. La dispersion du polyisocyanate dans de l'eau est réalisée par exemple au moyen d'un homogénéiseur tournant à grande vitesse (2000 à 3000 tours/minute) équipé d'une grille à mailles fixes (de l'ordre du millimètre). L'émulsion est introduite dans le mélange en fin de malaxage. La dispersion des fines gouttelettes du polyisocyanate leur confère une réactivité de surface plus grande et plus régulière.

Un résultat similaire peut être obtenu en introduisant l'isocyanate par pulvérisation directement dans le mortier ou béton en cours de malaxage ou, préalablement, sur une partie au moins du sable employé pour la confection du béton. Cette pulvérisation peut être réalisée par tout moyen classique pouvant produire de fines gouttelettes facilitant l'incorporation et la répartition de l'isocyanate dans le mortier ou béton.

Comme déjà indiqué, on utilise un ciment à temps de prise relativement court, c'est-à-dire inférieur à 5 heures. De préférence, le ciment employé est un ciment Portland dont le temps de prise est de l'ordre de ceux des ciments CPA, c'est-à-dire environ 2 à 3,5 heures. L'utilisation d'un ciment à temps de prise très court n'est pas nécessaire et peut, dans certains cas, s'avérer défavorable en raison du coût et des problèmes de mise en oeuvre.

Un autre avantage importante du procédé selon l'invention consiste en ce que la carbonatation de la chaux, supprimant les efflorescences, permet de stabiliser la teinte du béton.

EXEMPLE 1

Différentes éprouvettes de béton ont été fabriquées comme suit.

Une émulsion a été réalisée en mélangeant, dans un homogénéiseur tournant à 3.000 tours/minute, 4 parties en poids de di-isocyanate de diphényle-méthane avec 1 partie en poids d'eau.

4

0181261

Séparément, un mortier est réalisé par malaxage d'un mélange contenant des gravillons, du sable et du ciment CPA.

En fin de malaxage du mortier, une partie de l'émulsion réalisée a été incorporée au mortier, le malaxage étant poursuivi quelques minutes pour bien disperser le polyisocyanate. Immédiatement à la fin du malaxage, le béton frais a été moulé pour former les éprouvettes désirées.

Plusieurs essais ont été réalisés en faisant varier la quantité d'émulsion ajoutée de sorte que la quantité de di-isocyanatereprésentait respectivement 0 %, 0,5 %, 5 % et 10 % en poids par rapport au poids de ciment utilisé dans le mortier.

Les éprouvettes A, B, C, D respectivement obtenues ont été soumises à des essais thermogravimétriques 21 jours après leur moulage.

Le tableau I ci-dessous indique les quantités de chaux $Ca(OH)2$ et de $CaCO3$ produit par carbonatation de la chaux et le pourcentage de chaux par rapport au ciment.

TABLEAU I

| Produit | A | B | C | D |
|---|---|---|---|---|
| Emulsion | témoin | 0,5 %: | 5 | 10 % |
| Chaux | 4,1 % | 0,4% | 0 % | 0 % |
| CaCO3 produit par | 0% | 4,8% | 4,7 % | 5 % |
| carbonatation de la chaux | | | | |
| % de chaux par rapport | 16% | 19% | 19% | 20% |
| au ciment | | | | |

L'on remarque que des résultats significatifs sont obtenus pour un ajout de polyisocyanate dans une proportion relativement faible (0,5 %) et que les résultats ne progressent pas de façon très sensible lorsque l'ajout dépasse 5 % en poids par rapport au ciment. Un ajout compris entre 0,5 et 5% par rapport au poids du ciment, voire même 0,5 à 2% peut être suffisant.

Le pourcentage sensiblement plus élevé de chaux par rapport au ciment dans les éprouvettes obtenues selon le procédé conforme à l'invention traduit un degré d'hydratation plus avancé.

Quant à la chaux non carbonatée, elle est en quantité nulle ou pratiquement nulle.

Il en résulte une suppression des efflorescences et, par conséquent, une stabilité de la teinte du béton.

Cette stabilité a été confirmée par des mesures de luminance Y sur des éprouvettes E, F, G fabriquées comme précédemment, les quantités d'émulsion ajoutée correspondant respectivement à 0%, 0,5 % et 1 % en poids de polyisocyanate par rapport au poids de ciment. Les résultats des mesures après une semaine, trois semaines et cinq semaines d'exposition à l'extérieur sont donnés par le tableau II.

Tableau II

| Durée d'exposition | 1 semaine | 3 semaines | 5 semaines |
|---|---|---|---|
| E (témoin) | Y = 11 % | Y = 15 % | Y = 16 % |
| F | Y = 11,6% | Y = 11 % | Y = 11 % |
| G | Y = 11,5% | Y = 10 % | Y = 10 % |

Une augmentation de la résistance mécanique à court terme grâce au procédé selon l'invention a été démontrée par les essais suivants.

EXEMPLE 2

Des éprouvettes de béton de dimensions 7x7x28 cm ont été confectionnées avec un béton ayant la composition ci-après:

ciment Portland 3,150 kg

gravillon 3/8   9,030 kg

sable 0/3       8,190 kg

filler calcaire 0,630 kg

eau             1,730 kg

A cette composition de béton, on a ajouté lors du malaxage une quantité de polyisocyanate (M.D.I. : diisocyanate de diphényle méthane) émulsionné représentant 0,5% du poids du ciment.

La résistance moyenne à la compression de ces éprouvettes à 24 heures est de 16,7 MPa, alors que le béton de référence non carbonaté présente une résistance à la compression de 8,7 MPa, soit une résistance relative de 1,92.

EXEMPLE 3

Des éprouvettes de mortier de dimensions 4x4x16 cm ont été fabriquées à partir de la composition du mortier normal (NFP 15403)

ciment CPA 450 g

sable 1350 g

eau 225 g

L'eau et le ciment sont préalablement mélangés dans le malaxeur à mortier pendant 30 secondes, le sable est ensuite introduit et le mélange est poursuivi pendant 2 minutes et 30 secondes.

Le polyisocyanate est ensuite directement pulvérisé dans le malaxeur en rotation, la quantité introduite étant de 2% par rapport au poids du ciment. Le temps de malaxage est de 2 minutes.

Les résistances à la compression à 24 heures sont de 13,8 MPa pour les éprouvettes de mortier carbonaté et de 10,8 pour le mortier de référence soit une résistance relative de 1,28.

Le degré de carbonatation déterminé par les méthodes d'analyse thermique différentielle et thermogravimétrique indique qu'à 2 jours dans les conditions d'essais 70% de la chaux produite lors de l'hydratation du ciment est carbonatée.

L'exemple ci-après montre les effets à long terme du procédé de carbonatation selon l'invention.

EXEMPLE 4

Des pavés en béton, carbonatés par le procédé de carbonatation endogène, ont été placés sur parc pendant une année.

Les échantillons de béton prélevés à coeur contiennent 0,50% de chaux alors que les pavés non traités et placés aussi sur parc pendant une année complète de vieillissement naturel contiennent 1,65% de chaux.

Il est à noter que la carbonatation in situ du béton, telle qu'obtenue grâce au procédé selon l'invention, trouve également une application intéressante dans le cas d'un béton incorporant des fibres de verre. En effet, la destruction du milieu alcalin améliore la durabilité des fibres. Ainsi, l'enduction préalable des fibres de verre à l'aide de l'émulsion ou par pulvérisation de l'isocyanate permet une production locale d'anhydride carbonique et assure donc la carbonatation de l'interface fibre et matrice à base de ciment, comme le montre l'exemple 5 qui suit.

EXEMPLE 5

Des fibres de verre E employées sous forme de grille ont été préalablement enduites d'émulsion de polyisocyanate avant d'être placées dans une matrice à base de liant hydraulique. Après 6 mois de conservation à 20°C et 95% d'humidité relative, les fibres de verre E enduites de polyisocyanate et donc situées dans une matrice localement carbonatéee ne présentant pas de perte de résistance à la traction par rapport à leur résistance initiale, tandis que les fibres non enduites de polyisocyanate et placées par conséquent dans une matrice non carbonatée présentent une baisse de résistance de l'ordre de 30%.

D'une façon plus générale, on notera encore qu'aux avantages énoncés ci-avant, le procédé selon l'invention ajoute une stabilisation du retrait par carbonatation précoce et une amélioration de la résistance aux agents moyennement agressifs (eau douce, effluents faiblement acides).

REVENDICATIONS

1. Procédé de carbonatation du béton, caractérisé en ce qu'un polyisocyanate à l'état finement dispersé est mélangé à un mortier ou béton lors d'un malaxage de celui-ci, la quantité de polyisocyanate utilisée correspondant à environ 0,5 à 5% du poids du ciment, ce dernier ayant un temps de prise inférieur à 5 heures, et le mélange est directement mis en oeuvre après malaxage de sorte qu'une carbonatation endogène du béton est réalisée au moyen de l'anhydride carbonique qui est produit par réaction du polyisocyanate avec l'eau simultanément aux réactions d'hydratation du ciment.

2. Procédé selon la revendication 1, caractérisé en ce que l'on utilise un ciment Portland ayant un temps de prise compris entre 2 et 3,5 heures.

3. Procédé selon l'une quelconque des revendications 1 et 2, caractérisé en ce que le polyisocyanate finement dispersé est incorporé au mélange en fin de malaxage sous forme d'une émulsion dans laquelle le polyisocyanate et l'eau sont dans un rapport pondéral compris de préférence entre 4:1 et 2:1.

4. Procédé selon l'une quelconque des revendications 1 et 2, caractérisé en ce que le polyisocyanate finement dispersé est incorporé par pulvérisation dans le mélange en cours de malaxage.

5. Procédé selon l'une quelconque des revendications 1 et 2, caractérisé en ce que le polyisocyanate finement dispersé est préalablement pulvérisé sur une partie au moins du sable employé pour la confection du béton.

6. Procédé selon l'une quelconque des revendications 1 à 5, caractérisé en ce que des fibres de verre sont incorporées au béton après enduction par le polyisocyanate afin de carbonater l'interface fibre-matrice à base de ciment et d'améliorer ainsi la durabilité des fibres de verre.

**0181261**
Numero de la demande

RAPPORT DE RECHERCHE EUROPEENNE

Office européen
des brevets

EP  85 40 2116

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int Cl 4) |
|---|---|---|---|
| D,X | FR-A-2 167 586  (ICI) <br> * Revendications  1,2 et 8; page 11,  lignes 32-37; page 4, lignes 13-19; page 1, ligne 14 * | 1 | C 04 B   40/02 |
| A |  | 3 | |
| | ----- | | |

**DOMAINES TECHNIQUES RECHERCHES (Int Cl 4)**

C 04 B   40/00
C 04 B   24/00
C 04 B   28/00

Le present rapport de recherche a ete etabli pour toutes les revendications

| Lieu de la recherche | Date d achèvement de la recherche | Examinateur |
|---|---|---|
| LA HAYE | 03-02-1986 | DAELEMAN P.C.A. |

CATEGORIE DES DOCUMENTS CITES

X : particulièrement pertinent à lui seul
Y : particulièrement pertinent en combinaison avec un autre document de la même categorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82